# FASCICULE DE BREVET EUROPEEN

(11) **EP 1 890 917 B1**
(45) Date de publication et mention de la délivrance du brevet: **02.12.2009**
(21) Numéro de dépôt: 06764722.2
(22) Date de dépôt: 02.06.2006
(51) Int. Cl.: B60R 21/34, B62D 25/12

(54) **DISPOSITIF DE COMMANDE DE L'OUVERTURE DU CAPOT D'UN VEHICULE, NOTAMMENT POUR PROTEGER LA TETE D'UN PIETON EN CAS DE CHOC**
VORRICHTUNG ZUM STEUERN DES ÖFFNENS DER MOTORHAUBE EINES FAHRZEUGS, INSBESONDERE ZUM SCHUTZ DES KOPFES EINES FUSSGÄNGERS IM FALL EINER KOLLISION MIT IHM
DEVICE FOR CONTROLLING THE OPENING OF THE ENGINE HOOD OF A VEHICLE, PARTICULARLY FOR PROTECTING THE HEAD OF A PEDESTRIAN IN THE EVENT OF A COLLISION THEREWITH

(30) Priorité: 06.06.2005 FR 0505696
(43) Date de publication de la demande: 27.02.2008
(73) Titulaire: Renault SAS, 92100 Boulogne Billancourt (FR); SNPE Matériaux Energétiques, 75004 Paris (FR)
(72) Inventeur: BORG, Evrard, F-33127 Martignas sur Jalle (FR); LASPESA, Eric, F-83140 Six Fours (FR); NADEAU, Jean-Paul, F-83190 Ollioules (FR); TETU, Yvon, F-92250 La Garenne Colombes (FR)
(74) Mandataire: Largeau, Béatrice
(86) Numéro de dépôt international: PCT/FR2006/001255
(87) Numéro de publication internationale: WO 2006/131628

(56) Documents cités:
- DE-A1- 10 116 716
- DE-A1- 10 336 584
- US-A1- 2004 113 459
- US-B1- 6 439 330
- PATENT ABSTRACTS OF JAPAN vol. 008, no. 076 (M-288), 9 avril 1984 (1984-04-09) & JP 58 221773 A (NISSAN JIDOSHA KK), 23 décembre 1983 (1983-12-23)

## Description

La présente invention concerne un dispositif de commande de l'ouverture du capot d'un véhicule suivant un certain angle, de l'arrière vers l'avant du véhicule, notamment pour que ce capot puisse protéger la tête d'un piéton en cas de choc entre l'avant du véhicule et ce piéton.

Il est connu de l'art antérieur des dispositifs de commande pour l'ouverture du capot tels que décrits, par exemple, dans le document US2004/113459.

Dans cette position, la partie arrière du capot est rehaussée, de sorte que la tête du piéton qui a été heurtée ne risque pas de buter violemment contre le pare-brise du véhicule, mais au contraire que le capot entre en contact avec la tête du piéton le plus haut et le plus vite possible, pour ensuite l'accompagner dans la descente du capot et amortir l'impact au maximum.

A cet effet, le dispositif de commande de l'ouverture partielle du capot peut comporter un détecteur de choc placé à l'avant du véhicule coopérant avec un actionneur pour commander le déverrouillage du crochet assurant le verrouillage arriére du capot à la carrosserie du véhicule et des moyens pour guider l'ouverture du capot vers la position de protection précitée.

Un problème connu de ce type de dispositif est la présence d'un laps de temps entre le déverrouillage du crochet et le déploiement du capot. Ce délai pour passer d'une situation statique verrouillée a une situation dynamique du capot doit être réduit au maximum pour que le capot soit plus vite en position haute.

Un second problème à prendre en compte est la position dans laquelle le capot se trouve au moment de l'impact avec la tête du piéton. Il importe que cet impact n'ait pas lieu lorsque le capot est déjà en train de redescendre, l'absorption d'efforts ne serait alors pas optimale.

Le but de la présente invention est d'optimiser un tel dispositif de commande de l'ouverture partielle du capot d'un véhicule automobile qui réponde aux problèmes évoques ci-dessus.

L'invention vise ainsi un dispositif de commande de l'ouverture du capot du compartiment moteur d'un véhicule, relié de façon articulée à la carrosserie du véhicule pour pouvoir s'ouvrir partiellement par rotation autour de l'articulation de l'arrière vers l'avant du véhicule à partir d'une position dans laquelle le capot est verrouillé à la carrosserie, au moyen d'au moins un crochet, ce dispositif comprenant un détecteur de choc placé à l'avant du véhicule coopérant avec un actionneur pour commander le déverrouillage dudit crochet et des moyens pour guider l'ouverture du capot, **caractérisé en ce que** lesdits moyens pour guider l'ouverture du capot comprennent des moyens pour guider le bord arrière du capot dans une direction sensiblement verticale.

En assurant un tel guidage sensiblement vertical du bord arrière du capot, on réduit l'espace entre celui-ci et le pare-brise du véhicule, ce qui permet d'assurer une meilleure protection en cas de choc du piéton.

Pour permettre un tel guidage sensiblement vertical de l'arrière du capot, de préférence le bord avant du capot est relié à la carrosserie par des moyens permettant à ce bord avant de coulisser vers l'arrière lors de l'ouverture du capot.

Selon une version préférée de l'invention, les moyens pour guider l'ouverture du capot comprennent un support mobile relié de façon articulée au capot et un support fixe fixé à la carrosserie, ces deux supports étant reliés entre eux de façon articulée par un levier avant et un levier arrière dont les articulations auxdits supports définissent un quadrilatère.

Pour obtenir un déplacement sensiblement vertical de l'arrière du capot, lors de son ouverture provoquée par un impact, il convient bien entendu de bien définir les quatre points d'articulation et les côtés du quadrilatère déformable qui relie le support fixe au support mobile.

De préférence, le support mobile est relié de façon articulée par sa partie arrière au capot, suivant un axe parallèle aux axes d'articulation desdits leviers.

De préférence également, ledit actionneur commande successivement le déverrouillage du crochet et l'ouverture du capot et la commande dudit actionneur est déclenchée par une charge pyrotechnique.

Ainsi, le capot du véhicule peut être déplacé vers la position de protection très rapidement après un choc contre un piéton.

Dans une réalisation particulière et efficace de l'invention, ledit actionneur est un vérin dont le corps est articulé au support fixé à la carrosserie, et dont la tige est reliée, de façon articulée et coulissant par rapport au support mobile, au capot, l'extrémité de la tige étant adaptée pour venir en appui contre ledit crochet pour déplacer celui-ci vers la position de déverrouillage par rapport à la carrosserie.

De préférence, la tige du vérin est engagée dans un alésage pratiqué dans une bague montée pivotante dans le support mobile relié au capot, ladite tige du vérin comportant un épaulement pouvant venir en appui contre ladite bague après déclenchement dudit vérin.

Lorsque le capot est verrouillé par rapport à la carrosserie, il existe un jeu prédéterminé entre, d'une part, l'épaulement de la tige du vérin par rapport à la bague pivotante et, d'autre part, entre l'extrémité de la tige et ledit crochet.

Ces deux jeux permettent de tenir compte des tolérances de fabrication et de montage et, lors du déclenchement du vérin, d'assurer que l'extrémité de la tige du vérin vienne d'abord en contact avec le crochet pour déverrouiller le capot et qu'ensuite l'épaulement de la tige du vérin bute contre la bague pivotante pour déclencher le soulèvement du capot.

De préférence, le crochet est fixé de façon pivotante à l'arrière du support mobile relié au capot suivant un axe parallèle aux axes d'articulation desdits leviers avant et arrière, ce crochet pouvant pivoter contre l'action d'un ressort entre une position verrouillée par rapport à un doigt fixe par rapport à la carrosserie et une position déverrouillée par rapport à ce doigt.

De préférence également, le crochet comporte une partie convexe dirigée vers l'extrémité de la tige du vérin qui est conformée de telle sorte que l'extrémité de cette tige puisse glisser sur la partie convexe lors de l'ouverture et de la fermeture du capot.

Le dispositif de commande selon l'invention comprend en outre des moyens pour verrouiller le capot en position partiellement ouverte, ces moyens étant de préférence calculés pour céder sous l'effet d'une force prédéterminée appliquée sur le capot, notamment en cas de choc avec un piéton.

Ces moyens permettent d'une part de faire correspondre l'impact du piéton avec une position haute optimale du capot, et d'autre part de ne pas générer de point dur gênant la descente du capot après l'impact et l'accompagnement de la tête du piéton.

D'autres particularités et avantages de l'invention apparaîtront encore dans la description ci-après, en référence aux dessins annexés, donnés à titre d'exemples non limitatifs. Sur ces dessins :
- la figure 1 est un schéma illustrant le dispositif de commande de l'ouverture partielle du capot d'un véhicule en cas de choc à l'avant de celui-ci,
- la figure 2 et une vue latérale d'un dispositif de commande selon l'invention, le capot étant fermé et verrouillé,
- la figure 3 est une vue analogue à la figure 2, montrant le déverrouillage du crochet du dispositif,
- la figure 4 est une vue analogue à la figure 3, montrant le début de l'ouverture du capot,
- la figure 5 est une vue analogue à la figure 4, montrant le capot dans sa position haute,
- la figure 6 est une vue latérale d'une version améliorée du dispositif de commande en position haute,
- la figure 7 est une vue à plus grande échelle du détail A de la figure 6,
- la figure 8 est une vue en perspective d'un levier arrière du dispositif coopérant avec une biellette de blocage en position haute du capot,
- la figure 9 est une autre vue en perspective de l'ensemble levier et biellette de la figure 8.

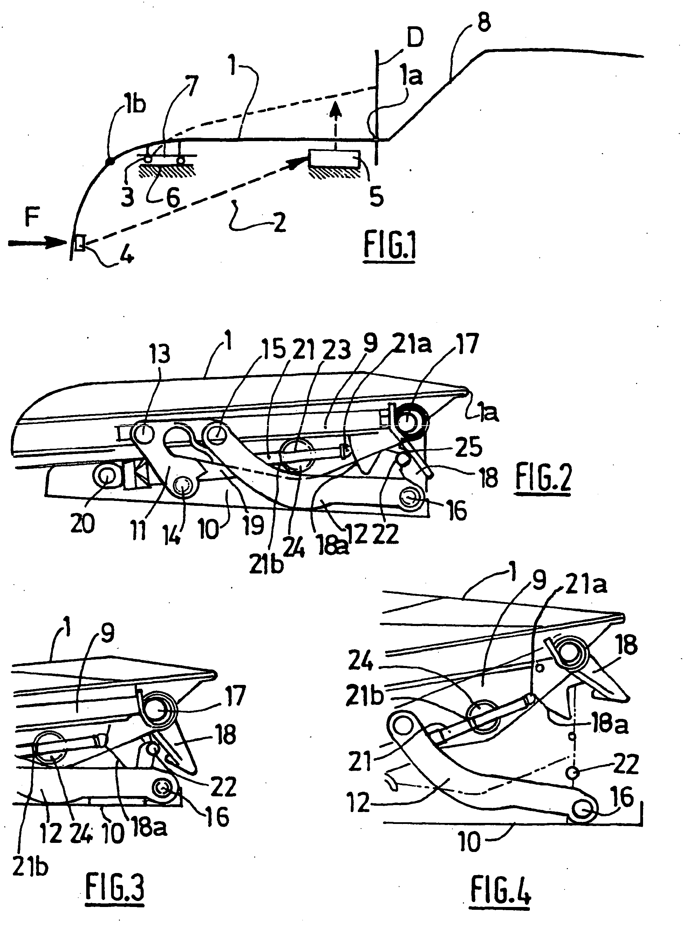

La figure 1 illustre schématiquement un dispositif de commande de l'ouverture du capot 1 du compartiment moteur 2 d'un véhicule, relié de façon articulée à la carrosserie du véhicule pour pouvoir s'ouvrir partiellement par rotation autour d'une articulation 3 de l'arrière vers l'avant du véhicule à partir d'une position, montrée en trait continu sur

la figure 1, dans laquelle le capot 1 est verrouillé à la carrosserie, au moyen d'au moins un crochet (non représenté sur la figure 1). Le dispositif comprend un détecteur de choc 4 placé à l'avant du véhicule coopérant avec un actionneur 5 pour commander le déverrouillage du crochet précité et des moyens pour guider l'ouverture du capot 1.

Conformément à l'invention, les moyens pour guider l'ouverture du capot 1 comprennent des moyens pour guider le bord arrière 1a du capot 1 dans une direction sensiblement verticale D.

Par ailleurs, le bord avant 1b du capot 1 est relié à la carrosserie 6 par des moyens de coulissement 7 permettant à ce bord avant 1b de coulisser vers l'arrière lors de l'ouverture du capot 1, comme montré en pointillés sur la figure 1.

Cette translation vers l'arrière du capot 1 a pour effet de réduire l'espace compris entre le bord arrière la du capot et le pare-brise 8 du véhicule.

Les figures 2 à 5 montrent en détail les moyens pour guider l'ouverture du capot 1 d'un premier mode de réalisation de l'invention.

Ces moyens comprennent un support mobile 9 relié de façon articulée au capot 1 et un support fixe 10 fixé à la carrosserie du véhicule. Ces deux supports 9, 10 sont reliés entre eux de façon articulée par un levier avant 11 et un levier arrière 12 dont les articulations 13, 14, 15, 16 aux supports 9, 10 définissent un quadrilatère déformable.

Le support mobile 9 est relié de façon articulée au capot 1 par un axe 17 parallèle aux axes d'articulation 13, 14, 15, 16 des deux leviers 11, 12.

Le dispositif de commande selon l'invention comprend un actionneur qui commande successivement le déverrouillage d'un crochet 18 et l'ouverture du capot 1.

Pour obtenir un déclenchement rapide, la commande de l'actionneur ci-dessus est déclenchée par une charge pyrotechnique du même type que celle utilisée pour déclencher les coussins gonflables.

Dans l'exemple représenté sur les figures 2 à 6, l'actionneur ci-dessus est un vérin dont le corps 19 est articulé en 20 au support 10 fixé à la carrosserie, et dont la tige 21 est reliée, de façon articulée et coulissant par rapport au support mobile 9, au capot 1. L'extrémité 21a de la tige 21 est adaptée pour venir en appui contre le crochet 18 pour déplacer celui-ci vers la position de déverrouillage par rapport à un doigt 22 fixe par rapport à la carrosserie.

On voit également sur les figures 2 à 5 que la tige du vérin est engagée dans un alésage 23 pratiqué dans une bague 24 montée pivotante dans le support 9 relié au capot 1. Cette tige 21 du vérin comporte un épaulement 21 b pouvant venir en appui contre la bague 24 après déclenchement du vérin.

Lorsque le capot 1 est verrouillé par rapport à la carrosserie, comme montré sur la figure 2, il existe un jeu prédéterminé entre, d'une part, l'épaulement 21b de la tige du vérin par rapport à la bague pivotante 24 et, d'autre part, entre l'extrémité de la tige 21a et le crochet 18. Ces jeux tiennent compte des tolérances de fabrication et de montage et permettent à la tige du vérin, après l'actionnement de la charge pyrotechnique, d'agir d'abord sur la bague 24 puis sur le crochet 18.

Comme montré également sur les figures 2 à 5, le crochet 18 est fixé de façon pivotante suivant l'axe 17 situé à l'arrière du support 9 relié au capot 1 et parallèle aux axes d'articulation 13, 14, 15, 16 des leviers avant et arrière 11, 12. Le crochet 18 peut pivoter contre l'action d'un ressort en spirale 25 entre une position verrouillée par rapport au doigt 22 solidaire du support 10 fixé à la carrosserie et une position déverrouillée par rapport à ce doigt 22 (voir figures 3, 4 et 5).

On voit également sur les figures 2 à 5 que le crochet 18 comporte une partie avant convexe 18a dirigée vers l'extrémité 21a de la tige du vérin qui est conformée de telle sorte que l'extrémité 21a de cette tige puisse glisser sur la partie convexe 18a du crochet sans échapper de celle-ci lors de l'ouverture et de la fermeture du capot 1.

Le corps 19 du vérin est articulé au support 10 fixé à la carrosserie suivant un axe 20 qui, dans l'exemple représenté, est situé à l'avant du levier avant 11 et l'axe de la bague pivotante 24 dans laquelle est engagée la tige du vérin est situé à l'arrière du levier arrière 12 du dispositif selon l'invention. Cependant, la position de l'axe de la bague pivotante 24 peut être différente.

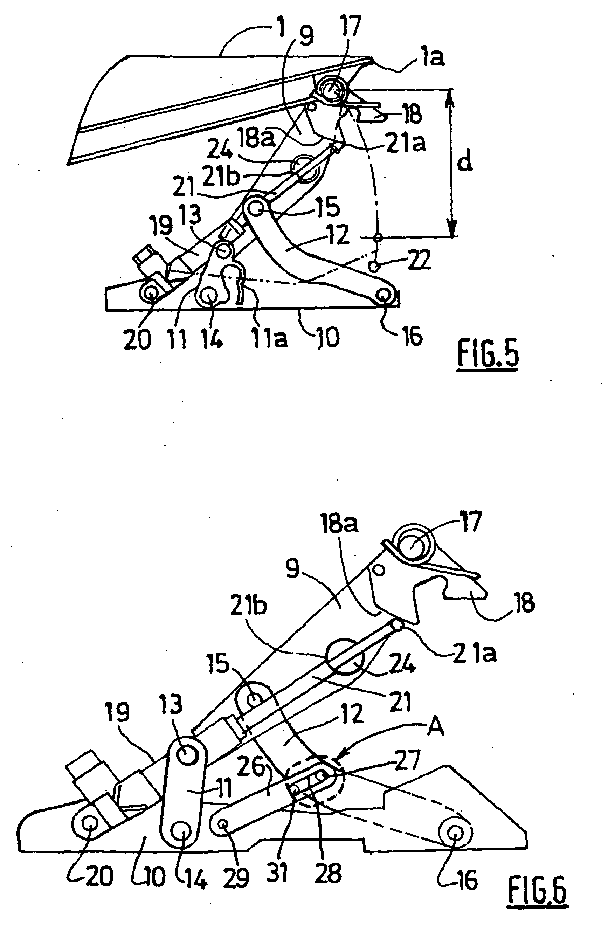

Le dispositif de commande selon l'invention comprend en outre des moyens pour verrouiller le capot 1 en position partiellement ouverte, c'est-à-dire dans sa position la plus haute représentée sur la figure 5.

A cet effet, l'un des deux leviers 11, 12 comporte des moyens coopérant avec le support 10 fixé à la carrosserie pour bloquer le capot 1 dans la position partiellement ouverte précitée.

Dans le cas de l'exemple représenté sur les figures 2 à 5, le levier avant 11 porte une béquille élastique 11a qui peut prendre appui sur le support fixe 10, dans la position représentée sur la figure 5. Cette béquille élastique 11a est suffisamment fragile pour céder, sous l'effet d'un impact de la tête d'un piéton sur le capot en position rehaussée, afin que celui-ci puisse s'abaisser et amortir l'impact.

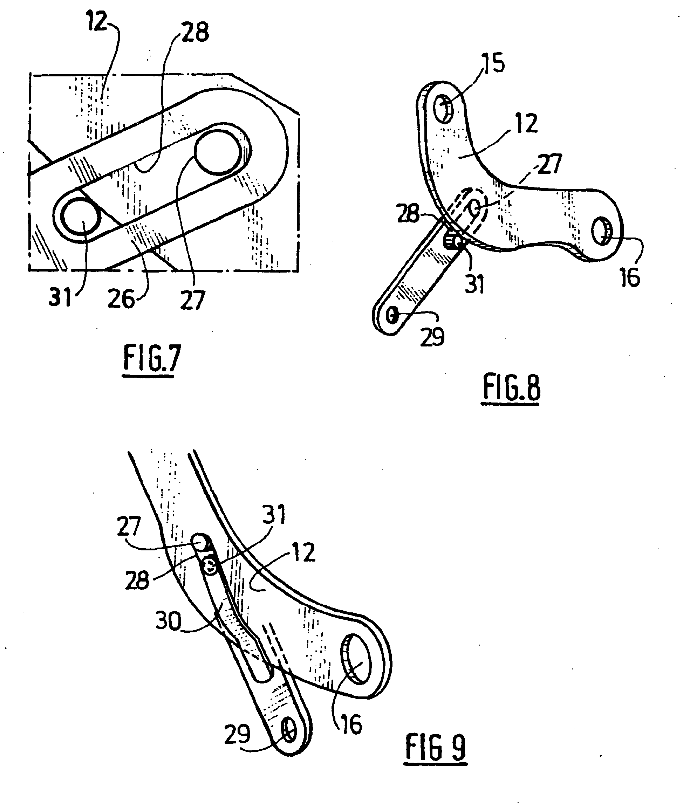

Dans l'exemple représenté sur la figure 6, les moyens pour bloquer le capot 1 en position d'ouverture partielle, c'est-à-dire soulevée, comprennent une biellette 26 reliant de façon articulée le levier arrière 12 au support 10 fixé à la carrosserie. Le levier arrière 12 comporte un pion 27 (voir également les figures 7 à 9) engagé dans une ouverture oblongue 28 s'étendant dans la direction de l'axe 29 d'articulation de la biellette 26 au support 10 précité. De plus, la biellette 26 comporte, sur l'une de ses faces (voir figure 9), une lame élastique 30 portant un pion 31 pouvant s'engager dans l'ouverture oblongue 28 de la biellette 26 et constituer une butée pour le levier arrière 12 empêchant son basculement vers le support 10. Ainsi, le capot 1 ne peut pas revenir de lui-même, c'est-à-dire sous l'effet de son propre poids, vers la position de fermeture.

Par ailleurs, dans tous les cas, le capot 1 est adapté pour pouvoir s'ouvrir de façon classique d'avant vers l'arrière, suivant un axe d'articulation 17 qui est commun avec l'axe de liaison entre le support mobile 9 et le capot 1 et avec l'axe de pivotement du crochet de verrouillage 18.

De façon non visible sur les figures, les supports 9 et 10 présentent une section transversale en U qui permet, non seulement de supporter les axes d'articulation des différents composants du dispositif selon l'invention, mais également de loger entre eux ces différents composants lorsque le dispositif est dans la position verrouillée représentée sur la figure 2, de façon à présenter un encombrement en hauteur minimal.

Par ailleurs, le fond du support 10 fixé à la carrosserie présente une partie relevée non représentée qui permet le guidage, lors du montage, du vérin à l'intérieur de la bague pivotante 24. Cette partie relevée présente surtout l'avantage en après vente de mettre facilement en position le déclencheur pyrotechnique à l'intérieur de la bague.

La disposition générale du mécanisme (forme du crochet, interaction tige-bague, mécanisme articulé et crochet de verrouillage, etc.) permet une réversibilité du mouvement, de manière à pouvoir repositionner le capot en position basse en cas de besoin, par exemple, de déclenchement intempestif.

Le dispositif de commande que l'on vient de décrire fonctionne de la façon suivante :

En cas de choc appliqué dans le sens de la flèche F de la figure 1 engendré à l'impact avec un piéton, ce choc est détecté par le détecteur 4 qui commande, par une charge pyrotechnique, le déclenchement des vérins 19, 21.

L'extrémité 21 a de la tige du vérin pousse le crochet 18 qui, en tournant autour de son axe 17, se met dans la position de déverrouillage par rapport au doigt 22 représentée sur la figure 3.

L'épaulement 21 b de la tige du vérin vient alors en contact avec la bague pivotante 24, ce qui provoque la levée du support mobile 9 et le basculement des leviers 11 et 12 vers le haut.

Le crochet 18 se sépare complètement du doigt 22 (voir figure 4), tandis que l'extrémité 21a de la tige du vérin continue d'appuyer sur la surface convexe 18a du crochet contre l'action du ressort de rappel 25.

Lorsque la tige du vérin atteint son extension maximale, le capot 1 atteint sa levée maximale représentée sur les figures 5 et 9, dans laquelle la distance d atteint par exemple 150 mm.

Dans cette position, le capot 1 est capable d'amortir le choc de la tête du piéton.

Dans cette position, l'inclinaison du capot 1 est également maintenue par les moyens de blocage constitués par la languette flexible 11a, dans le cas des figures 2 à 5, et par l'ensemble biellette 26 et lame élastique 30 représenté sur les figures 6 à 9.

Pour remettre le capot 1 en position normale verrouillée, il suffit, dans le cas des figures 6 à 9, de pousser sur le pion 31 pour qu'il se dégage latéralement de sa position en butée par rapport au levier 12 pour libérer l'ensemble du mécanisme.

Dans une version préférée de l'invention, la languette 11a, dans le cas du dispositif représenté sur les figures 2 à 5, et le pion 31 de la version montrée sur les figures 6 à 9, sont calculés pour céder lorsque le capot 1 est dans la position soulevée représentée sur les figures 5 et 6, sous l'effet d'un effort prédéterminé appliqué sur le capot 1, en cas d'impact avec la tête d'un piéton afin d'atténuer les effets de cet impact.

Ainsi, en cas d'impact avec la tête d'un piéton, la languette 11a ou le pion 31 ci-dessus cèdent, de sorte que le capot s'abaisse en accompagnant la tête du piéton, amortissant ainsi l'effet de l'impact.

## Revendications

1. Dispositif de commande de l'ouverture du capot (1) du compartiment moteur d'un véhicule, relié de façon articulée à la carrosserie du véhicule pour pouvoir s'ouvrir partiellement par rotation autour de l'articulation de l'arrière vers l'avant du véhicule à partir d'une position dans laquelle le capot (1) est verrouillé à la carrosserie, au moyen d'au moins un crochet (18), ce dispositif comprenant un détecteur de choc (4) placé à l'avant du véhicule coopérant avec un actionneur (5, 19, 21) pour commander le déverrouillage dudit crochet (18) et des moyens pour guider l'ouverture du capot (1), **caractérisé en ce que** lesdits moyens pour guider l'ouverture du capot (1) comprennent des moyens pour guider le bord arrière (1a) du capot (1) dans une direction sensiblement verticale (D).

2. Dispositif de commande selon la revendication 1, **caractérisé en ce que** le bord avant (1b) du capot (1) est relié à la carrosserie par des moyens (7) permettant à ce bord avant (1b) de coulisser vers l'arrière lors de l'ouverture du capot (1).

3. Dispositif de commande selon l'une des revendications 1 ou 2, **caractérisé en ce que** les moyens pour guider l'ouverture du capot (1) comprennent un support mobile (9) relié de façon articulée au capot et un support fixe (10) fixé à la carrosserie, ces deux supports (9, 10) étant reliés entre eux de façon articulée par un levier avant (11) et un levier arrière (12) dont les articulations (13, 14, 15, 16) auxdits supports (9, 10) définissent un quadrilatère.

4. Dispositif dé commande selon la revendication 3, **caractérisé en ce que** le support mobile (9) est relié de façon articulée au capot par un axe (17) parallèle aux axes d'articulation desdits leviers (11, 12).

5. Dispositif de commande selon l'une des revendications 1 à 4, **caractérisé en ce que** ledit actionneur (5, 19, 21) commande successivement le déverrouillage du crochet (18) et l'ouverture du capot (1).

6. Dispositif de commande selon l'une des revendications 1 à 5, **caractérisé en ce que** la commande dudit actionneur (5, 19, 21) est déclenchée par une charge pyrotechnique.

7. Dispositif de commande selon l'une des revendications 3 à 6, **caractérisé en ce que** ledit actionneur est un vérin dont le corps (19) est articulé au support (10) fixé à la carrosserie, et dont la tige (21) est reliée, de façon articulée et coulissant par rapport au support mobile (9), au capot, l'extrémité de la tige (21) étant adaptée pour venir en appui contre ledit crochet (18) pour déplacer celui-ci vers la position de déverrouillage par rapport à la carrosserie.

8. Dispositif de commande selon la revendication 7, **caractérisé en ce que** la tige du vérin est engagée dans un alésage (23) pratiqué dans une bague (24) montée pivotante dans le support mobile (9) relié au capot (1), ladite tige du vérin comportant un épaulement (21b) pouvant venir en appui contre ladite bague (24) après déclenchement dudit vérin.

9. Dispositif de commande selon la revendication 8, **caractérisé en ce que**, lorsque le capot (1) est verrouillé par rapport à la carrosserie, il existe un jeu prédéterminé entre, d'une part, l'épaulement (21b) de la tige du vérin par rapport à la bague pivotante (24) et, d'autre part, entre l'extrémité de la tige (21a) et ledit crochet (18).

10. Dispositif de commande selon l'une des revendications 3 à 9, **caractérisé en ce que** ledit crochet (18) est fixé de façon pivotante à l'arrière du support mobile (9) relié au capot, suivant un axe (17) parallèle aux axes d'articulation desdits leviers avant et arrière (11, 12), ce crochet (18) pouvant pivoter contre l'action d'un ressort (25) entre une position verrouillée par rapport à un doigt (22) fixe par rapport à la carrosserie et une position déverrouillée par rapport à ce doigt (22).

11. Dispositif de commande selon les revendications 9 et 10, **caractérisé en ce que** ledit crochet (18) comporte une partie convexe (18a) dirigée vers l'extrémité (21a) de la tige du vérin qui est conformée de telle sorte que l'extrémité (21a) de cette tige puisse glisser sur la partie convexe (18a) lors de l'ouverture et de la fermeture du capot (1)

12. Dispositif de commande selon l'une des revendications 7 à 11, **caractérisé en ce que** le corps (19) du vérin est articulé au support (10) fixé à la carrosserie suivant un axe (20) situé à l'avant dudit levier avant (11) et l'axe (24) d'articulation de la tige par rapport au support mobile (9) relié au capot est situé à l'arrière dudit levier arrière (12).

13. Dispositif de commande selon l'une des revendications 1 à 12, **caractérisé en ce qu'**il comprend en outre des moyens pour verrouiller le capot (1) en position partiellement ouverte.

14. Dispositif de commande selon la revendication 13, **caractérisé en ce que** les moyens pour verrouiller le capot (1) en position partiellement ouverte sont calculés pour céder sous l'effet d'une force prédéterminée appliquée sur le capot, notamment en cas de choc avec un piéton.

15. Dispositif de commande selon l'une des revendications 3 à 14, **caractérisé en ce que** l'un des deux leviers (11, 12) comporte des moyens coopérant avec le support (10) fixé à la carrosserie pour bloquer le capot (1) en position partiellement ouverte.

16. Dispositif de commande selon la revendication 15, **caractérisé en ce que** les moyens pour bloquer le capot (1) en position d'ouverture partielle comprennent une biellette (26) reliant de façon articulée le levier arrière (12) au support (10) fixé à la carrosserie, ce levier arrière (12) comportant un pion (27) engagé dans une ouverture oblongue (28) s'étendant dans la direction de l'axe (29) d'articulation de la biellette (26) au support (10) précité, cette biellette (26) comportant une lame élastique (30) portant un pion (31) pouvant s'engager dans l'ouverture oblongue (28) de la biellette (26) et constituer une butée pour le levier arrière (12) empêchant son basculement vers ledit support (10).

17. Dispositif de commande selon l'une des revendications 9 à 16, **caractérisé en ce que** le capot (1) est en outre adapté pour pouvoir s'ouvrir de façon classique d'avant vers l'arrière, suivant un axe d'articulation (17) qui est commun avec l'axe de liaison entre le support mobile (9) et le capot (1) et avec l'axe de pivotement dudit crochet (18).

## Claims

1. A device for controlling the opening of the hood (1) of the engine compartment of a vehicle, connected in an articulated manner to the bodywork of the vehicle to be able to open partially by rotating about the articulation from the rear to the front of the vehicle from a position in which the hood (1) is latched to the bodywork, by means of at least one hook (18), this device comprising an impact detector (4) placed at the front of the vehicle interacting with an actuator (5, 19, 21) to control the unlatching of said hook (18) and means for guiding the opening of the hood (1), **characterized in that** said means for guiding the opening of the hood (1) include means for guiding the rear edge (1a) of the hood (1) in a substantially vertical direction (D).

2. The control device as claimed in claim 1, **characterized in that** the front edge (1b) of the hood (1) is connected to the bodywork by means (7) allowing this front edge (1b) to slide rearward when the hood (1) is opened.

3. The control device as claimed in one of claims 1 or 2, **characterized in that** the means for guiding the opening of the hood (1) include a movable support (9) connected in an articulated manner to the hood and a fixed support (10) fixed to the bodywork, these two supports (9, 10) being connected together in an articulated manner by a front lever (11) and a rear lever (12) whose articulations (13, 14, 15, 16) to said supports (9, 10) define a quadrilateral.

4. The control device as claimed in claim 3, **characterized in that** the movable support (9) is connected in an articulated manner to the hood by a shaft (17) parallel to the articulation shafts of said levers (11, 12).

5. The control device as claimed in one of claims 1 to 4, **characterized in that** said actuator (5, 19, 21) controls successively the unlatching of the hook (18) and the opening of the hood (1).

6. The control device as claimed in one of claims 1 to 5, **characterized in that** the control of said actuator (5, 19, 21) is triggered by a pyrotechnic charge.

7. The control device as claimed in one of claims 3 to 6, **characterized in that** said actuator is a cylinder whose body (19) is articulated to the support (10) fixed to the bodywork, and whose rod (21) is connected, in an articulated manner and slidingly relative to the movable support (9), to the hood, the end of the rod (21) being adapted to press against said hook (18) to move the latter toward the unlatched position relative to the bodywork.

8. The control device as claimed in claim 7, **characterized in that** the cylinder rod is engaged in a bore (23) made in a ring (24) mounted so as to pivot in the movable support (9) connected to the hood (1), said cylinder rod comprising a shoulder (21 b) that can press against said ring (24) after said cylinder is triggered.

9. The control device as claimed in claim 8, **characterized in that**, when the hood (1) is latched relative to the bodywork, there is a predetermined clearance, on the one hand, between the shoulder (21b) of the cylinder rod relative to the pivoting ring (24) and, on the other hand, between the end of the rod (21a) and said hook (18).

10. The control device as claimed in one of claims 3 to 9, **characterized in that** said hook (18) is fixed in a pivoting manner to the rear of the movable support (9) connected to the hood, along a shaft (17) parallel to the articulation shafts of said front and rear levers (11, 12), this hook (18) being able to pivot against the action of a spring (25) between a latched position relative to a finger (22) that is fixed relative to the bodywork and an unlatched position relative to this finger (22).

11. The control device as claimed in claims 9 and 10, **characterized in that** said hook (18) comprises a convex portion (18a) directed toward the end (21a) of the cylinder rod that is conformed so that the end (21a) of this rod can slide on the convex portion (18a) when the hood (1) opens and closes.

12. The control device as claimed in one of claims 7 to 11, **characterized in that** the body (19) of the cylinder is articulated to the support (10) fixed to the bodywork along a shaft (20) situated at the front of said front lever (11) and the articulation shaft (24) of the rod relative to the movable support (9) connected to the hood is situated at the rear of said rear lever (12).

13. The control device as claimed in one of claims 1 to 12, **characterized in that** it also comprises means for latching the hood (1) in the partially open position.

14. The control device as claimed in claim 13, **characterized in that** the means for latching the hood (1) in the partially open position are calculated to give way under the effect of a predetermined force applied to the hood, particularly in the case of an impact with a pedestrian.

15. The control device as claimed in one of claims 3 to 14, **characterized in that** one of the two levers (11, 12) comprises means interacting with the support (10) fixed to the bodywork to lock the hood (1) in the partially open position.

16. The control device as claimed in claim 15, **characterized in that** the means for locking the hood (1) in a partially open position comprise a link rod (26) connecting in an articulated manner the rear lever (12) to the support (10) fixed to the bodywork, this rear lever (12) comprising a pin (27) engaged in an oblong opening (28) extending in the direction of the shaft (29) for articulating the link rod (26) to the aforementioned support (10), this link rod (26) comprising an elastic strip (30) supporting a pin (31) that is able to engage in the oblong opening (28) of the link rod (26) and form a stop for the rear lever (12) preventing it from tilting toward said support (10).

17. The control device as claimed in one of claims 9 to 16, **characterized in that** the hood (1) is also adapted to be able to open in a conventional manner from front to rear, along an articulation shaft (17) that is common with the shaft for connection between the movable support (9) and the hood (1) and with the pivoting shaft of said hook (18).

## Patentansprüche

1. Steuervorrichtung für das Öffnen der Motorhaube (1) des Motorraums eines Fahrzeugs, die gelenkig mit der Karosserie des Fahrzeugs verbunden ist, um sich durch Rotation um das Gelenk aus einer Position, in der die Motorhaube (1) mittels eines Hakens (18) an der Karosserie verriegelt ist, durch ein Mittel mit mindestens einem Haken (18) teilweise von der Hinterseite zu der Vorderseite des Fahrzeugs hin zu öffnen, wobei die Vorrichtung einen Stoßdetektor (4), der im vorderen Bereich des Fahrzeugs platziert ist und mit einem Aktuator (5, 19, 21) zusammenarbeitet, um die Entriegelung des Hakens (18) zu steuern, und ein Mittel zum Leiten der Öffnung der Motorhaube (1) aufweist, **dadurch gekennzeichnet, dass** das Mittel zum Leiten der Öffnung der Motorhaube (1) ein Mittel zum Leiten der Hinterkante (1a) der Motorhaube (1) in eine im wesentlichen vertikale Richtung (D) aufweist.

2. Steuervorrichtung gemäß dem Anspruch 1, **dadurch gekennzeichnet, dass** die Vorderkante (1b) der Motorhaube (1) über ein Mittel (7), das erlaubt, dass die Vorderkante (1b) bei dem Öffnen der Motorhaube (1) nach hinten verschiebbar ist, mit der Karosserie verbunden ist.

3. Steuervorrichtung gemäß einem der Ansprüche 1 oder 2, **dadurch gekennzeichnet, dass** das Mittel zum Leiten der Öffnung der Motorhaube (1) eine bewegliche Auflage (9), die gelenkig mit der Motorhaube verbunden ist, und eine feste Auflage (10), die an der Karosserie befestigt ist, aufweist, wobei die zwei Auflagen (9, 10) über einen vorderen Hebel (11) und einen hinteren Hebel (12), deren Gelenke (13, 14, 15, 16) mit den Auflagen (9, 10) ein Viereck beschreiben, gelenkig miteinander verbunden sind.

4. Steuervorrichtung gemäß dem Anspruch 3, **dadurch gekennzeichnet, dass** die bewegliche Auflage (9) über eine Achse (17), die parallel zu den Achsen der Gelenke der Hebel (11, 12) ist, gelenkig mit der Motorhaube verbunden ist.

5. Steuervorrichtung gemäß einem der Ansprüche 1 bis 4, **dadurch gekennzeichnet, dass** der Aktuator (5, 19, 21) die Entsperrung des Hakens (18) und die Öffnung der Motorhaube (1) nacheinander steuert.

6. Steuervorrichtung gemäß einem der Ansprüche 1 bis 5, **dadurch gekennzeichnet, dass** die Steuerung des Aktuators (5, 19, 21) durch eine pyrotechnische Ladung ausgelöst wird.

7. Steuervorrichtung gemäß einem der Ansprüche 3 bis 6, **dadurch gekennzeichnet, dass** der Aktuator ein Hubzylinder ist, dessen Körper (19) an die Auflage (10), die an der Karosserie befestigt ist, angegliedert ist, und dessen Schaft (21) gelenkig und verschiebbar gegenüber der beweglichen Auflage (9) mit der Motorhaube verbunden ist, wobei die Spitze des Schafts (21) daran angepasst ist, an den Haken (18) anzuliegen, um diesen bezüglich der Karosserie in die Entriegelungsposition zu verstellen.

8. Steuervorrichtung gemäß dem Anspruch 7, **dadurch gekennzeichnet, dass** der Schaft des Hubzylinders in eine Bohrung (23) eingeführt ist, die in einem Ring (24) angebracht ist, der schwenkbar in der beweglichen Auflage (9) montiert ist, die mit der Motorhaube (1) verbunden ist, wobei der Schaft des Hubzylinders einen Vorsprung (21b) aufweist, der nach dem Auslösen des Hubzylinders gegen den Ring (24) anliegen kann.

9. Steuervorrichtung gemäß Anspruch 8, **dadurch gekennzeichnet, dass,** wenn die Motorhaube (1) mit der Karosserie verriegelt ist, ein vorbestimmter Abstand, zwischen dem Vorsprung (21b) des Schafts des Hubzylinders gegenüber dem schwenkbaren Ring (24) einerseits, und zwischen dem Ende des Schafts (21a) und dem Haken (18) andererseits, existiert.

10. Steuervorrichtung gemäß einem der Ansprüche 3 bis 9, **dadurch gekennzeichnet, dass** der Haken (18) schwenkbar an der Hinterseite der beweglichen Auflage (9), die mit der Motorhaube verbunden ist, entlang einer Achse (17), die parallel zu den Gelenkachsen der vorderen und hinteren Hebel (11, 12) ist, angebracht ist, wobei der Haken (18) gegen die Wirkung einer Feder (25) zwischen einer verriegelten Position gegenüber einem Zapfen (22), der bezüglich der Karosserie angebracht ist, und einer entriegelten Position bezüglich dem Zapfen (22) schwenkbar ist.

11. Steuervorrichtung gemäß den Ansprüchen 9 und 10, **dadurch gekennzeichnet, dass** der Haken (18) einen konvexen Abschnitt (18a) aufweist, der in Richtung des Endes (21a) des Schafts des Hubzylinders ausgerichtet ist, der derartig ausgelegt ist, dass das Ende (21a) dieses Schafts bei der Öffnung und dem Verschließen der Motorhaube (1) auf dem konvexen Abschnitt (18a) gleiten kann.

12. Steuervorrichtung gemäß einem der Ansprüche 7 bis 11, **dadurch gekennzeichnet, dass** der Körper (19) des Hubzylinders gelenkig entlang einer Achse (20), die sich an der Vorderseite des vorderen Hebels (11) befindet, an der Auflage (10), die an der Karosserie befestigt ist, angebracht ist, und die Achse (24) des Gelenks des Schafts gegenüber der beweglichen Auflage (9), die an der Motorhaube befestigt ist, befindet sich hinter dem hinteren Hebel (12).

13. Steuervorrichtung gemäß einem der Ansprüche 1 bis 12, **dadurch gekennzeichnet, dass** diese darüber hinaus Mittel zum Verriegeln der Motorhaube (1) in einer teilweise geöffneten Position aufweist.

14. Steuervorrichtung gemäß dem Anspruch 13, **dadurch gekennzeichnet, dass** die Mittel zum Verriegeln der Motorhaube (1) in einer teilweise geöffneten Position derart berechnet sind, dass sie einer vorbestimmten Kraftwirkung, die auf die Motorhaube ausgeübt wird, nachgeben, insbesondere im Fall eines Zusammenstoßes mit einem Fußgänger.

15. Steuervorrichtung gemäß einem der Ansprüche 3 bis 14, **dadurch gekennzeichnet, dass** einer der zwei Hebel (11, 12) ein Mittel aufweist, das mit der Auflage (10), die an der Karosserie befestigt ist, zum Blockieren der Motorhaube (1) in einer teilweise geöffneten Position, zusammenwirkt.

16. Steuervorrichtung gemäß Anspruch 15, **dadurch gekennzeichnet, dass** das Mittel zum Blockieren der Motorhaube (1) in einer teilweise geöffneten Position einen Schwingarm (26) aufweist, der den hinteren Hebel (12) gelenkig mit der Auflage (10), die an der Karosserie befestigt ist, verbindet, wobei der hintere Hebel (12) einen Stift (27) aufweist, der im Eingriff mit einer länglichen Öffnung (28) ist, die sich in die Richtung der Gelenkachse (29) des Schwingarms (26) der oben genannten Auflage (10) erstreckt, wobei der Schwenkarm (26) ein elastisches Blatt (30) aufweist, das einen Stift (31) trägt, der in die längliche Öffnung (28) des Schwingarms (26) eingreifen kann, und einen Anschlag für den hinteren Hebel (12) darstellt, um seine Kippbewegung in Richtung der Auflage (10) zu verhindern.

17. Steuervorrichtung gemäß einem der Ansprüche 9 bis 16, **dadurch gekennzeichnet, dass** die Motorhaube (1) zusätzlich daran angepasst ist, sich auf die klassische Weise von der Vorderseite zu der Hinterseite, entlang einer Gelenkachse (17), die gleich der Verbindungsachse zwischen der beweglichen Auflage (9) und der Motorhaube (1) sowie der Schwenkachse des Hakens (18) ist, öffnen zu lassen.
